**Europäisches Patentamt**

(19) **European Patent Office**

**Office européen des brevets**

(11) Veröffentlichungsnummer: **0 082 931**
**B1**

(12) **EUROPÄISCHE PATENTSCHRIFT**

(45) Veröffentlichungstag der Patentschrift:
**26.02.86**

(21) Anmeldenummer: **82109491.9**

(22) Anmeldetag: **14.10.82**

(51) Int. Cl.⁴: **C 09 D 5/02, C 08 L 33/00,
C 08 L 35/00**

(54) **Leicht entfernbare Schutzüberzüge liefernde wässrige Polymerdispersionen bzw. -emulsionen und ihre Verwendung zum temporären Oberflächenschutz.**

(30) Priorität: **24.12.81 DE 3151372**

(43) Veröffentlichungstag der Anmeldung:
**06.07.83 Patentblatt 83/27**

(45) Bekanntmachung des Hinweises auf die Patenterteilung:
**26.02.86 Patentblatt 86/9**

(84) Benannte Vertragsstaaten:
**DE FR GB IT SE**

(56) Entgegenhaltungen:
**DE - A - 1 519 220**

(73) Patentinhaber: **Henkel Kommanditgesellschaft auf Aktien, Postfach 1100 Henkelstrasse 67,
D-4000 Düsseldorf-Holthausen (DE)**

(72) Erfinder: **Wilk, Hans-Christoph, An der Obererft 94,
D-4040 Neuss (DE)**
Erfinder: **Geke, Jürgen, Dr., Stoffeler Damm 108,
D-4000 Düsseldorf (DE)**

LIBER, STOCKHOLM 1986

## Beschreibung

Die Erfindung betrifft Beschichtungsmittel auf Basis wässriger Dispersionen bzw. Emulsionen, die zur Ausbildung von Schutzüberzügen geeignet sind, wie sie beispielsweise bei dem temporären Schutz von Automobilkarosserien, Maschinen bzw. Maschinenteilen, Werkzeugen und anderen metallischen oder nichtmetallischen Gegenständen während des Transports und/oder der Lagerung insbesondere gegen klimatische und/oder mechanische Einflüsse zum Einsatz kommen, Die Erfindung will dabei insbesondere die Schaffung solcher Schutzüberzugsmassen ermöglichen, die beim Einsatz einen wirkungvollen temporären Schutz ermöglichen, gleichzeitig aber mittes geeigneter wässriger Lösungen leicht von den temporär zu schützenden Oberflächen entfernt werden können.

Zum zeitweiligen Schutz von Autokarosserien beim Transport und der Lagerung in nicht überdachten Hallen oder gänzlich im Freien werden vielfach Überzüge auf Basis von Wachsen verwendet. Diese werden in organischen Lösungsmitteln gelöst oder aber auch als wässrige Dispersionen eingesetzt. Wenngleich die technischen Eigenschaften derartiger Wachszubereitungen für viele Anwendungen ausreichen, so zeigen sie doch den Nachteil geringer mechanischer Stabilität insbesondere bei einer Erwärmung durch beispielsweise Sonneneinetrahlung.

Die DE-A1-1519 220 beschreibt ein Verfahren zum Schützen von Oberflächen gegen Fremdstoffe, bei dem man auf die reine Oberfläche einen nicht unterbrochenen Überzug oder Film einer wäß-rigen Lösung oder Emulsion einer mit Wasser mischbaren, säurebeständigen, mit Alkali mischbaren Verbindung aufträgt und durch Verdunstung der wäßrigen Phase glänzende, reflektierende, wasserabweisende Feststoffschichten ausbildet. Bevorzugt sollen den eingesetzten wäßrigen Lösungen bzw. Emulsionen natürliche und/oder synthetische Wachse zugesetzt sein. Das einzige konkrete Ausführungsbeispiel schildert ein Stoffgemisch, das die Wachskomponente in großem Überschuß zur filmbildenden, mit Alkali mischbaren Komponente enthält. Wie zuvor angegeben, zeigen auch derartige Zubereitungen eine unzureichende Stabilität.

Es hat daher Bemühungen gegeben, wieder entfernbare Schutzüberzüge auf Basis synthetischer Polymerer zu schaffen, die sich durch bessere mechanische Eigenschaften auszeichnen. So wird in der DE-OS 22 63 311 vorgeschlagen, Polyvinylacetat beziehungsweise Polyvinylbutyral in organischen Lösungsmitteln gelöst, einzusetzen. Die FR-PS 22 95 100 nennt Polyamide in wässrigen Alkoholen. Acrylate in wässrigem Isopropanol als Bestandteil eines zweischichtigen Überzugsmittels werden in der JA-OS 79 07 303 beansprucht. Die nach diesen drei letztgenannten Verfahren hergestellten Überzüge sind - abgesehen von der nachteiligen Mitverwendung organischer Lösungsmittel - nicht mit wässrigen Reinigungsmittellösungen entfernbar, sondern müssen von den damit überzogenen Gegenständen abgeschält werden.

Überzüge, die mit schwach alkalischen Reinigungslösungen wieder entfernbar sind, werden in der JA - PS 75 67 845 beschrieben. Hier sollen Säuregruppen enthaltende Acrylate in Form ethanolischer Lösungen eingesetzt werden. Auch hier ist also die Verwendung eines organischen Lösungsmittels vorgesehen. Demgegenüber schlägt die JA-PS 75 39 685 vor, Schutzkolloide enthaltende Dispersionen von Acrylat-Copolymeren mit einem Gehalt bis zu 5 % Säuren in Gegenwart geringer Restlösungsmittelmengen einzusetzen. Zwar ist hier die Problematik der Mitverwendung von Lösungsmitteln bereits weitgehend eingeschränkt, die geringe Säurezahl der Acrylat-Copolymeren erschwert jedoch das Wiederauflösen der Überzüge nach Lagerung. Weiterhin ist zu befürchten, daß die Überzüge vor einer vollständigen Durchtrocknung zur Redispergierung neigen. Dies ist von beträchtlicher Bedeutung, wenn beispielsweise etwa frisch überzogene Kraftfahrzeuge beziehungsweise Karosserien sofort dem Regen ausgesetzt werden.

Für die Praxis des hier betroffenen Sachgebiets bleiben trotz aller bisher beschriebenen Systeme wichtige Wünsche offen. Insbesondere besteht das Bedürfnis, nach temporär wirksamen Schutzüberzugsmassen, die möglichst rasch nach Aufbringung auf den zu schützenden Gegenstand gegen mechanische Einflüsse oder auch gegen Regen schützen, andererseits aber mittels einfacher wässriger Waschlösungen leicht von dem geschützten Gegenstand wieder abgewaschen werden können. Die Verwendung von Lösungsmitteln aber auch anderer flüchtiger Bestandteile außer Wasser soll nicht erforderlich sein. Dabei soll das neue Beschichtungsmittel die gewünschten günstigen Eigenschaften bezüglich der temporären Schutzwirkung aufweisen. So wird beispielsweise gefordert, daß entsprechende Überzüge beziehungsweise Überzugsmassen 6 Monate oder mehr stabil sind. Weiterhin sollen die Beschichtungsmittel nach üblichen Lackierverfahren, wie zum Beispiel durch Spritzen, Streichen oder Tauchen aufgebracht werden können.

Die vorliegende Erfindung geht von der Aufgabe aus, Beschichtungsmittel zur Verfügung zu stellen, mit denen ohne Freisetzung von organischen Lösungsmitteln oder anderen flüchtigen Chemikalien Gegenstände mit beispielsweise lackierten oder metallischen Oberflächen in einfacher Weise überzogen werden können unter Ausbildung von Schutzüberzügen, die unmittelbar nach dem Antrocknen gegen Regenwasser und Spritzwasser beständig sind. Diese Schutzüberzüge sollen andererseits mit konventionellen Reinigern und/oder warmem Wasser leicht wieder entfernbar sein, nachdem sie ihre Aufgabe erfüllt haben.

Gegenstand der Erfindung sind dementsprechend in einer ersten Ausführungsform leicht entfernbare Schutzüberzüge liefernde wässrige Beschichtungsmittel auf Basis wässriger Dispersionen beziehungsweise Emulsionen von zur Salzbildung befähigten synthetischen Copolymerisaten, wobei das Kennzeichen der Erfindung darin liegt, daß diese wässrigen Beschichtungsmittel - neben Wasser - als wesentliche Bestandteile enthalten:

a) bei Temperaturen von 5°C und darüber filmbildende, zur Salzbildung befähigte Copolymerisate mit einem Gehalt an Säure- oder Aminogruppen, die als solche wasserunlöslich, in Salzform jedoch wasserlöslich sind und

2

in wässriger Dispersion beziehungsweise Emulsion vorliegen,
b) mit Wasser nicht mischbare, bei Raumtemperatur flüssige schwer flüchtige Nichtlöser für die Copolymerisate zu a) mit einem Festpunkt unterhalb von 10°C.
c) nichtionogene Emulgatoren mit einem HLB-Wert < 10 sowie
d) gegebenenfalls weitere übliche Hilfs- und/oder Zusatzstoffe,
wobei die Komponenten a) - c) in den folgenden Mengenverhältnissen vorliegen:
30 - 60 Gew.-% filmbildende Copolymerisate zu a)
5 - 50 Gew.-% Nichtlöser zu b) sowie
0,05 - 2,5 Gew.-% der nichtionogenen Emulgatoren zu c)
und wobei sich diese Mengenangaben in allen Fällen auf das Gewicht der wäßrigen Dispersion des Copolymerisats zu a) ohne den Zusatz der Komponenten b - d) beziehen.

Die erfindungsgemäßen Beschichtungsmittel sind demzufolge Polymerdispersionen - im üblichen Sprachgebrauch des Praktikers auch häufig als Polymeremulsionen bezeichnet -, denen durch Zugabe bestimmter Hilfsstoffe wichtige Eigenschaftsverbesserungen verliehen worden sind. Die erfindungsgemäßen Beschichtungsmitteln liefern insbesondere temporäre Schutzüberzüge mit verbesserter Festigkeit gegen Redispergierung und insbesondere verbesserter Wasserfestigkeit im Einsatz. Gleichwohl sind diese Schutzüberzüge mit wässrigen Lösungen von Reinigungsmitteln leicht von den geschützten Gegenständen zu entfernen.

Wenn auch die dem erfindungsgemäßen Ergebnis zugrundeliegenden Erscheinungen nicht völlig erklärt werden können, so wird doch das folgende Zusammenwirken der Komponenten vermutet: Nach Aufbringen der Beschichtungsmittel auf nicht saugende Untergründe verdunstet das Wasser und es entstehen bei Temperaturen von 5°C und darüber Polymerfilme. Der Nichtlöser gemäß (b) ist bestimmungsgemäß mit dem filmbildenden Copolymerisat zu a) nicht verträglich. Beim Auftrocknen der Dispersion beziehungsweise Emulsion tritt er offenbar an die Oberfläche des sich ausbildenden Polymerfilms. Dabei werden offenbar auch im Stoffgemisch vorliegende Emulgatoren, insbesondere die von der Herstellung der wässrigen Dispersion zu a) vorliegenden ionischen Emulgatoren, zumindest teilweise aus dem Polymerfilm extrahiert, wodurch sich dessen Wasserbeständigkeit substantiell verbessert. Die Gefahr der Redispergierung, beispielsweise unter dem Einfluß von Regenwasser, besteht nicht mehr. Durch die besondere konstitutionelle Beschaffenheit des Copolymerisats zu a) ist seine beabsichtigte spätere Entfernung mit wässrigen Reinigungsmittellösungen gleichwohl sichergestellt.

Die den erfindungsgemäßen Beschichtungsmitteln zugrundeliegenden Copolymerisate zu a) sollen bei Temperaturen bis hinunter zu 5°C filmbildend sein. Eine weitere Voraussetzung für ihre Eignung ist, daß sie durch ihren Gehalt an Säure- oder Aminogruppen als solche zwar wasserunlöslich sind, durch Salzbildung an diesen Gruppen jedoch in eine wasserlösliche Form überführbar sind.

Die Herstellung der erfindungsgemäß eingesetzten Copolymerisate zu a) erfolgt durch ansich bekannte Emulsionscopolymerisation. In einer ersten wichtigen Ausführungsform der Erfindung sind die Polymerverbindungen zu a) freie Carboxylgruppen aufweisende Copolymerisate, die im alkalischen Bereich unter Salzbildung wasserlöslich sind und dementsprechend mit wässrigen alkalischen Reinigungsmittellösungen entfernbar werden.

Gemäß dieser ersten Ausführungsform der Erfindung bestehen die Copolymerisate zu a) aus einer oder mehreren ungesättigten Carbonsäuren A und einem oder vorzugsweise mehreren wasserunlöslichen Comonomeren B. Bevorzugte Beispiele für die Carbonsäuren zu A sind Acrylsäure, Methacrylsäure, Itaconsäure, Citraconsäure und/oder Crotonsäure. Geeignet - wenn auch weniger bevorzugt sind aber auch Fumarsäure, Maleinsäure beziehungsweise Derivate der bisher genannten Säuren, beispielsweise Halogenacrylsäuren, wie etwa α -Chloracrylsäure. Geeignete andere Derivate der genannten Carbonsäuren sind insbesondere Anhydride oder Halbester der genannten Dicarbonsäuren. Allgemein gilt, daß als Komponente A in den hier betroffenen Copolymerisaten zu a) ungesättigte Mono- und/oder Dicarbonsäuren mit vorzugsweise bis zu 5 C-Atomen bevorzugt sind.

Comonomere gemäß B sind demgegenüber hydrophobe, mit den Komponenten gemäß A copolymerisierbare Monomere, die bei der ansich bekannten Herstellung der erfindungs-gemäß eingesetzten Copolymerisate zu a) in Wasser als geschlossener Phase eine diskrete, disperse, organische Flüssigphase ausbilden. Geeignete Comonomere sind insbesondere Ester ungesättigter copolymerisierbarer Carbonsäuren und/oder Alkohole, Vinylaromaten, ungesättigte Nitrile beziehungsweise Halogenide und/oder Olefine ohne weitere Funktionalität. Im einzelnen sind geeignete Comonomere dieser Klasse beispielsweise Ester der Acrylsäure und/oder Methacrylsäure, Vinylaromaten wie Styrol, α -Methylstyrol und/oder Vinyltoluol, höhere N-Alkylamide ungesättigter polymerisierbarer Carbonsäuren, insbesondere der Acryl- und/oder Methacrylsäure, sowie weitere copolymerisierbare olefinische Monomere, etwa solche von der Art des Acryl- und/oder Methacrylnitrils, des Vinylchlorids beziehungsweise Vinylidenchlorids oder auch Olefine wie Ethylen, Butadien, Chlorbutadien und Isopren sowie vergleichbare Olefine ohne weitere Funktionalität. Gemeinsam ist diesen Comonomeren gemäß B neben ihren hydrophoben Eigenschaften die Tatsache, daß sie keine unmittelbar Salz bildenden Gruppen aufweisen.

Gewünschtenfalls können bei der Herstellung der Copolymerisate zu a) auch wasserlösliche, nicht zur Salzbildung befähigte Comonomere in beschränkten Mengen mitverwendet werden. Ihre Menge liegt üblicherweise unter 30 Gew.-%, vorzugsweise unter 10 Gew.-% - jeweils bezogen auf das Gewicht des Copolymerisates zu a) -. Comonomere dieser Art - im folgenden als Komponenten C bezeichnet - sind beispielsweise Hydroxyalkylester ungesättigter Carbonsäuren wie Hydroxyalkylacrylate und/ oder Methacrylate, wasserlösliche N-substituierte oder unsubstituierte Amide ungesättigter Carbonsäuren wie Acrylamid beziehungsweise wasserlösliche N-substituierte Acrylamide aber auch andere wasserlösliche copolymerisierbare Komponenten wie N-Vinylpyrrolidon.

Aus den genannten Monomerklassen A, B und C lassen sich besonders günstige Kombinationen auswählen und dann in ansich bekannter Weise unter den Bedingungen der Emulsionscopolymerisation die Copolymerisate zu a) herstellen. So kann es bevorzugt sein, entsprechende wässrige Dispersionen beziehungsweise Emulsionen herzustellen, die als Comonomere der Gruppe A Crotonsäure oder Itaconsäure in einer Menge bis zu 10 Gew.-% und als Comonomeres der Gruppe B Ester des Vinylakohols, insbesondere Vinylacetat, enthalten. Nach einer weiteren besonders bevorzugten Ausführungsform werden als Comonomere A Acrylsäure und/oder Methacrylsäure und als Comonomere der Gruppe B Ester der Acryl- und/oder Methacrylsäure mit $C_1$-$C_5$-Alkoholen - z.B. Methyl-(meth)acrylat, Ethyl-(meth)-acrylat und/oder Butyl-(meth)acrylat - sowie Styrol verwendet. Als ein besonders bevorzugtes Comonomeres der Gruppe C kann 2-Hydroxy-ethyl-(meth)-acrylat mitverwendet werden.

Die Mengenverhältnisse der Komponenten A, B und C werden so aufeinander abgestimmt, daß das freie Carbonsäuregruppen enthaltende Copolymerisat wasserunlöslich ist, in wässrig alkalischen Reinigungsmitteln jedoch durch Salzbildung an den Carbonsäurenfunktionen wasserlöslich wird. Im allgemeinen liegt die Menge der Carbonsäurefunktionen im Copolymerisat zu a) - berechnet als Acrylsäure - im Bereich von etwa 5 - 35 Gew.-%. Dies entspricht einer Säurezahl zwischen 35 und 270 mg KOH/g. Möglich ist es beispielsweise, daß die Carbonsäurefunktion im Copolymerisat zu a) im Bereich von etwa 10 bis 25 Gew.-% - berechnet als Acrylsäure - liegt (Säurezahl 75 bis 200 mg KOH/g). Aber auch darunterliegende Mengen an freier Carbonsäurefunktion führt bei geeigneter Abstimmung der Komponenten A, B und gegebenenfalls C zu einer hinreichenden Löslichkeit der Copolymerisate in wässrig alkalischen Reinigungslösungen. Insbesondere kann hier die Wasserlöslichkeit durch die erfindungsgemäß vorgesehene Mitverwendung ansich wasserlöslicher Comonomerer gemäß C beeinflußt werden. Anstelle der Dispersionen säuregruppenenthaltender Copolymerisate gemäß a) lassen sich erfindungsgemäße Beschichtungsmittel auch aus solchen Copolymerisaten herstellen, die in neutralen oder alkalischen Waschwässern unlöslich, in leicht sauren Waschwässern jedoch löslich sind. Gemäß einer weiteren Ausführungsform der Erfindung werden dementsprechend als Copolymerisate zu a) Copolymere verwendet, die anstelle der ungesattigten Carbonsäurefunktionen - bzw. anstelle der ungesättigten Carbonsäuren gemäß A - ungesättigte copolymerisierbare Komponenten mit einer Aminfunktion enthalten. Im allgemeinen kann das Copolymerisat zu a) bis zu etwa 60 Gew.-% Aminogruppen enthaltende Monomereinheiten aufweisen. Entsprechende Monomerkomponenten mit Aminfunktion sind beispielsweise Ester und/oder Amide aus ungesättigten Carbonsäuren mit vorzugsweise bis zu 5 C-Atomen und Alkoholen und/oder primären Aminen, die zusätzlich eine tertiäre Aminogruppe aufweisen.

Besonders geeignete Verbindungen mit einer basischen Amino- bzw. substituierten Aminogruppe sind copolymerisierbare Monomere mit Monoalkyl- bzw. Dialkylaminoalkylestergruppen wie Dialkylaminoalkyl-(meth)-acrylat, beispielsweise 2-Dimethylaminoethyl-methacrylat, 3-Di-alkylamino-2,2-dimethylpropyl-methacrylat und die entsprechenden Acrylate. Geeignet sind aber auch andere basischen Stickstoff enthaltende Derivate solcher ungesättigten Säuren - insbesondere der Acrylsäure und/ oder der Methacrylsäure - wie die den zuvor genannten basischen Estern entsprechenden basischen Stickstoff enthaltenden Säureamide, beispielsweise das N-(3-Di-alkylaminopropyl-)methacrylamid und das entsprechende Acrylamid. Geeignet sind weiterhin basischen Stickstoff enthaltende copolymerisierbare Komponenten von der Art der vinylsubstituierten Pyridinverbindungen, beispielsweise 2- bzw. 4-Vinylpyridin, Diallylalkylamin und vergleichbare Verbindungen. Entsprechende Derivate anderer ungesättigter Säuren mit basischem Stickstoff, beispielsweise entsprechende Derivate der Maleinsäure oder Itaconsäure, können ebenfalls mitverwendet werden, sie spielen jedoch im allgemeinen technisch eine untergeordnete Rolle.

Zur Einstellung der gewünschten filmbildenden Eigenschaften müssen in ansich bekannter Weise Monomere, die in Richtung auf harte Überzüge mit hohen Glastemperaturen wirken, mit solchen, die in Richtung auf weiche, flexible Überzüge wirken, kombiniert werden. Geeignete Monomere lassen sich beispielsweise anhand der bekannten Glastemperaturen entsprechender Homopolymerisate auswählen. Es gilt hier das allgemeine Fachwissen der Polymerchemie.

Beispiele für Monomere, die in Richtung auf harte Überzüge wirken, sind Acrylsäure, Methacrylsäuremethylester und Styrol. In Richtung auf weiche Überzüge wirken etwa Methylacrylat und Butylacrylat. Geeignete Gewichtsverhältnisse zwischen Monomeren, die in Richtung auf harte Überzüge (hohe Glastemperaturen) wirken und solchen, die in Richtung auf weiche Überzüge (niedere Glastemperaturen) wirken, liegt üblicherweise zwischen 4: 1 und 1: 1.

Erfindungsgemäß kann es zweckmäßig sein, als Copolymerisate zu a) entsprechende Komponenten mit vergleichsweise niedrigem Molekulargewicht einzusetzen. Zweckmässig ist es beispielsweise dann, wenn die Schutzüberzüge in Tauchbädern entfernt werden sollen und ein rasches Andicken der Tauchbäder verhindert werden soll. Das mittlere Molekulargewicht solcher Copolymerisate zu a)kann hier beispielsweise im Bereich von "2 000" bis "30 000" g/mol liegen.

Zur Erniedrigung des Molgewichts werden in der hier beschriebenen Ausführungsform der Erfindung bei der Herstellung der Copolymerisate zu a) sogenannte Regler in Mengen bis zu 20 mol-%, bezogen auf Monomere, eingesetzt. Dem Polymer-Fachmann sind eine Vielzahl derartiger Verbindungen bekannt. In der Technik ist die Verwendung von Mercapto-Verbindungen gebräuchlich. Gängige Mercapto-Verbindungen sind Thioglykolsäure, Mercaptoethanol, lineare und verzweigte Mercaptane mit mehr als 8 Kohlenstoffatomen, insbesondere tert. Dodecylmercaptan sowie 2-Hydroxyalkylmercaptane mit mehr als 8 Kohlenstoffatomen.

Zur Herstellung der wässrigen Polymerdispersionen bzw. Emulsionen gemäß a) durch Emulsionspolymerisation werden in ansich bekannter Weise Emulgatoren benötigt. Bevorzugt können dabei anionische Emulgatoren, gegebenenfalls in Kombination mit nichtionischen Emulgatoren zum Einsatz kommen. Die Auswahl des bestimmten Emulgatorsystems richtet sich nach den Polymerisationsbedingungen und den miteinander umzusetzenden Monomeren. Dem Fachmann stehen eine große Anzahl solcher anionischen und nichtionischen Emulgatoren zur Verfügung, wobei es sich bei den anionischen Emulgatoren größtenteils um Monoestern der Schwefelsäure oder um Sulfonsäuren und bei den nichtionischen Emulgatoren um Umsetzungsprodukte des Ethylenoxids mit Fettalkoholen oder Alkylphenolen handelt. Im einzelnen sei hier auf das Lehrbuchwissen der Emulsionspolymerisation verwiesen. Für die im Rahmen der Erfindung bevorzugten Dispersionen bzw. Copolymerisate zu a) auf Acrylatbasis sind Fettalkoholethersulfate sowie Sulfobernsteinsäureester ethoxylierter Alkylphenole besonders geeignet.

Die Auslösung der Emulsionspolymerisation erfolgt in bekannter Weise durch übliche Radikalbildner. Genannt seien hier die Salze der Peroxydischwefelsäure in Kombination mit Reduktionsmitteln. Es können jedoch auch organische Radikalbildner, z.B. Azoverbindungen oder organische Peroxide, verwendet werden.

Wie eingangs geschildert ist für das erfindungsgemäße Ergebnis vermutlich bedeutungsvoll, daß substantielle oder wenigstens nicht unbeträchtliche Anteile dieser Reaktionshilfsmittel bei der Herstellung der wässrigen Dispersion bzw. Emulsionen zu a) und dabei insbesondere der hier eingesetzten Emulgatorsysteme im Rahmen der Auftrocknung und Filmausbildung mit dem dabei aus dem Polymerfilm austretenden Nichtlöser zu b) aus dem Materialverbund herausgelöst werden. Als organische Nichtlöser zu b) kommen zahlreiche Flüssigkeiten in Betracht. Allgemein gilt, daß sie den Folgenden Anforderungen entsprechen sollten: geringe Flüchtigkeit bei Raumtemperatur, Viskosität < 100 Pas, Nichtmischbarkeit mit Wasser, Schnelzpunkt < 10°C sowie gewünschtenfalls biologische Abbaubarkeit.

Die Nichtlöser zu b) können beispielsweise ausgewählt sein aus der Klasse bei Raumtemperatur flüssigen, schwer flüchtigen Paraffin- bzw. Isoparaffingemische mit vorzugsweise mehr als 10 C-Atomen, es kann sich dabei aber auch um Carbonsäuren und/oder Alkohole mit mehr als 6 C-Atomen, um Etheralkohole mit mehr als 10 C-Atomen und/oder um entsprechende bei Raumtemperatur flüssige schwer flüchtige Ester handeln.

Geeignet sind im einzelnen beispielsweise aliphatische oder aromatische Kohlenwasserstoffe mit mehr als 8, vorzugsweise mit mehr äls 15 C-Atomen. Bevorzugt sind dabei Schnitte synthetisch hergestellter Isoparaffine, die mit den unterschiedlichsten Siedegrenzen im Handel angeboten werden. In einer weiteren Ausführungsform der Erfindung können natürlich vorkommende Fettsäuren, ihre Derivate oder Folgeprodukte verwendet werden, soweit sie den zuvor angegebenen allgemeinen Bedingungen entsprechen. Geeignet sind beispielsweise flüssige Schnitte natürlich vorkommender Fettsäuren, also solche mit hohem Anteil an Fettsäuren mit weniger als 12 C-Atomen und/oder einer oder mehreren Doppelbindungen. Geeignet sind weiterhin verzweigte Fettsäuren bzw. Fettsäuregemische, z.B. Isononansäure. Auch Ester der genannten Fettsäuren mit Alkoholen mit vorzugsweise bis zu 18 C-Atomen, vorzugsweise mit bis zu 3 C-Atomen sind geeignet, soweit sie Schmelzpunkte nicht oberhalb etwa 10°C aufweisen.

Geeignet sind aber auch Fettalkohole und deren Mischungen. Bevorzugt sind hier Mischungen, die einen hohen Anteil an Hexanol und/oder Octadecenol aufweisen sowie verzweigte Fettalkohole, welche durch Dimerisierung (Guerbet-Reaktion) hergestellt worden sind. Weiterhin geeignet sind Etheralkohole, insbesondere solche, die durch Ringöffnung von Olefinoxiden mit bis zu 20 C-Atomen mittels Hydroxylverbindungen - z.B. mit mono-, di- und/ oder trifunktionellen Alkoholen - hergestellt worden sind. Schließlich sind Ester aromatischer oder aliphatischer Mono- und/oder Polycarbonsäuren - insbesondere Ester aliphatischer Dicarbonsäuren - mit aliphatischen Alkoholen mit bis zu 20 C-Atomen geeignet. Bevorzugt sind hier Ester der Adipinsäure, der Sebacinsäure und der Phthalsäure.

Eine bevorzugte Gruppe der Nichtlöser zu b) sind entsprechende schwer flüchtige bei Raumtemperatur flüssige Komponenten, die im üblichen Sprachgebrauch auf Grund ihrer Anwendung in der Kunststoffindustrie im allgemeinen als "Weichmacher" bezeichnet werden, auch wenn sie gegenüber den erfindungsgemäß eingesetzten Copolymerisaten zu a) keine typische Weichmacherfunktion erfüllen. Derartige Weichmacher sind: Ester von Fettsäuren, die verzweigt oder geradkettig sein können, d.h. Ester von natürlichen Fettsäuren, die etwa 12 - 18 C-Atomenaufweisen oder solche, die durch Dimerisierung von niederen Alkoholen mit etwa 6 - 10 C-Atomen durch Guerbet-Reaktion und anschließende Oxidation hergestellt worden sind. Diese Fettsäuren können mit niederen Alkoholen wie Methanol, Ethanol oder auch Butanol verestert sein. Weitere geeignete Weichmacher sind solche auf Basis von Phthalsäure, insbesondere mit Alkoholen, die 4 bis 10 C-Atome aufweisen. Ein üblicher Vertreter ist das Dioctylphthalat. Weiterhin kommen in Betracht chlorierte Paraffine oder auch oxidierte Kohlenwasserstoffe oder auch sogenannte Weichmacher auf Polyesterbasis, sofern sie einen Festpunkt unterhalb von 10°C, vorzugsweise nicht oberhalb von 5°C aufweisen.

Nach einer ganz besonders bevorzugten Ausführungsform der Erfindung werden als Nichtlöser- bzw. Weichmacher Komponente zu b) Triglyceride mit mehr als einer Doppelbindung pro Molekül verwendet. Geeignete Triglyceride sind beispielsweise Sojaöl, Kokosöl, Sonnenblumenöl oder Leinöl.

Neben den genannten speziellen Komponenten ist eine grosse Anzahl weiterer organischer Flüssigkeiten verwendbar. Im einzelnen kann der Fachmann anhand der oben genannten Kennzahlen und der Bestimmung der Löslichkeit der Komponenten zu a) und b) entscheiden, ob die als organische Flüssigkeit b) ausgewählte Verbindung geeignet ist oder nicht. Ein einfacher Test zur Löslichkeitsbestimmung in diesem Sinn wird wie folgt ausgeführt: Es wird geprüft, ob ein getrocknetes Stück des Polymerüberzugs zu a) bei Raumtemperatur in einem Überschuß der organischen Flüssigkeit zu b) vollständig in Lösung geht oder nicht.

Um den Nichtlöser zu b) in den wässrigen polymerdispersionen in feinverteilter Form zu halten und um insbesondere das Aufrahmen oder Absetzen der flüssigen organischen Nichtlöserkomponente zu verhindern wird in den wässrigen Polymerdispersionen ein Emulgator bzw. Emulgatorsystem mitverwendet. Geeignet sind entsprechende Emulgatoren mit HLB-Werten kleiner 10, vorzugsweise kleiner 6. Entsprechende Handelsprodukte, die für die Lehre der Erfindung geeignet sind, sind beispielsweise Sorbitanester, d.h. Umsetzungsprodukte, die bei der Veresterung von Sorbit mit Fettsäuren unter Wasserabspaltung entstehen. Besonders geeignet ist Sorbitanmonooleat. Weitere geeignete Emulgatoren sind Umsetzungsprodukte von Fettalkoholen oder Alkylphenolen mit Ethylenoxid. Besonders geeignete Emulgatoren aus dieser Gruppe sind das Reaktionsprodukt von Nonylphenol mit 5 Ethylenoxid sowie das Umsetzungsprodukt eines Oleylalkohols mit 2 Ethylenoxid. Allgemeiner gilt hier, daß als nichtionogene Emulgatoren besonders geeignet sind Umsetzungsprodukte von Nonylphenol mit 2 - 7 mol Ethylenoxid und/oder das Umsetzungsprodukt eines Fettalkohols mit mehr als 10 C-Atomen mit 2 - 8 mol Ethylenoxid und/oder ein Sorbitanester.

Neben den Komponenten zu a), b) und c) können gewünschtenfalls in den Beschichtungsmitteln weitere übliche Hilfsstoffe zu b) vorliegen. Beispiele sind etwa Farbstoffe, Pigmente, Stabilisatoren, Korrosionsinhibitoren und dergleichen mehr.

Die Herstellung der erfindungsgemäßen Beschichtungsmittel ist wenig kritisch. Man stellt zunächst die Grunddispersion des Copolymerisats zu a) her und fügt dann die Hilfsstoffe zu b), c) und gegebenenfalls d) zu. Es ist dabei bevorzugt, diese Hilfsstoffe zu b) bis d) zunächst vorzumischen und in Vormischung zur wässrigen Dispersion bzw. Emulsion des Copolymerisats zu a) zuzugeben. Eine getrennte Zufügung in beliebiger Reihenfolge ist jedoch auch möglich. Eine weitere Möglichkeit zur Herstellung der erfindungsgemäßen Beschichtungsmassen besteht darin, die Hilfsstoffe zu b) bis d) vor/ oder während der Polymerisation des Copolymerisats zu a) zuzugeben.

Die erfindungsgemäße Beschichtungsmittel enthalten wie zuvor angegeben in der wäßrigen Dispersion die einzelnen aufgeführten Komponenten in den folgenden Mengenverhältnissen:

30 - 60 Gew.-% filmbildendes Copolymerisat zu a)

5 - 50 Gew.-% des Nichtlösers bzw. "Weichmachers" zu b) sowie

0,05 - 2,5 Gew.-% des nichtionogenen Emulgators zu c) wobei sich diese Mengenangaben in allen Fällen auf das Gewicht der wässrigen Dispersion des Copolymerisats zu a) (d.h. ohne den Zusatz der Hilfsstoffe gemäß b -d) beziehen. Die gegebenenfalls mitverwendeten Hilfsstoffe zu d) - d.h. die Farbstoffe oder Korrosionsinhibitoren oder auch Pigmente und Stabilisatoren gegen einen thermischen Einfluß oder gegen den Einfluß von UV-Lichtkönnen beispielsweise in Mengen von0,05 bis 5,0 Gew.-% - ebenfalls bezogen auf das Gewicht der wässrigen Dispersion des Copolymerisats zu a) - mitverwendet werden.

Ein besonders geeignetes Beschichtungsmittel der Erfindung enthält die folgenden wesentlichen Bestandteile:

als Komponente a): im alkalischen Milieu wasserlösliches Mischpolymerisat auf Basis von Acrylpolymerisaten mit 5 bis 35 Gew.-% Carbonsäurefunktionen (berechnet als Acrylsäure) sowie weiteren Comonomeren aus der Gruppe Alkyl-(meth)acrylate, Hydroxyalkylacrylate, Styrol und Acrylnitril,

als Komponente b): hydrophobe flüssige "Weichmacher" mit einem Festpunkt unterhalb von 10° C, wobei das Gewichtsverhältnis von a: b zwischen etwa 20: 1 und 20:10 liegt, sowie

als Komponente c): nichtionogene Emulgatoren mit einem HLB-Wert zwischen 2 und 10 in einer Menge von 1 bis 5 Gew.-%, bezogen auf die Summe der Komponenten a) und b) sowie gegebenenfalls

als Komponente d): Farbstoffe, Pigmente und/oder Stabilisatoren.

Der Gegenstand der Erfindung ist weiterhin die Verwendung derartiger Emulsionen zum temporären Oberflächenschutz, insbesondere von metallischen und/oder lackierten Oberflächen, wie Automobilkarosserien und sonstigen Geräten, die in freier Atmosphäre gelagert werden und gegen klimatische und/oder mechanische Einflüsse geschützt werden müssen. In dem mit den erfindungsgemäßen über Monate hinweg bis zu etwa 2 Jahren gegen die Einflüsse der Atmosphäre - selbst wenn sie relativ aggressiv ist, wie in der Nähe von offenem Gewässer und bei relativ starkem UV-Einfluß - weitgehend geschützt und unangreifbar gemacht werden.

Das Aufbringen der Schutzschichten erfolgt mit in der Lacktechnik gängigen Mitteln. So können die Überzüge durch Spritzen, Streichen, Tauchen oder Rakeln aufgebracht werden. Im Einzelfall kann es günstig sein, den zu überziehenden Gegenstand oder auch das Überzugsmittel über Raumtemperatur zu erwärmen, um ein rascheres Entweichen des Wassers aus den wässrigen Dispersionen zu erreichen. Hierdurch kann insbesondere eine möglicherweise in der Anfangsphase vorhandene Korrosionsneigung des zu beschichtenden Gutes unterdrückt werden.

Um im Einzelfall besonders dünne Beschichtungen zu erzielen, kann es zweckmäßig sein, die Überzugsmittel mit Wasser weiter zu verdünnen. Hiermit ist dann allerdings das Erfordernis verbunden, zur Filmbildung größere Wassermengen verdunsten zu müssen.

Im folgenden wird zunächst die Herstellung wässriger Grunddispersionen von

1. säuregruppenhaltiger Polymere sowie

2. aminogrupppenhaltiger Polymere

geschildert. In den anschließenden Beispielen werden erfindungsgemäße Beschichtungsmassen und ihre Verwendung geschildert.

6

## Beispiele

Herstellung der Grunddispersionen zu a)

### 1. Säuregruppenhaltige Polymere (I - III)

In einem Dreihalskolben, der mit Rührer, Rückflußküh-ler und $N_2$-Zuleitung sowie Tropftrichter ausgestattet war, wurde vorgelegt eine Mischung aus
477,0 g Monomeren
jeweils 9,5 g von Natriumlauryl-(polyethoxy)-sulfat (10 mol EO) sowie Nonylphenoxy-(polyethoxy)-dinatriumsulfosuccinat (10 mol EO) und weiterhin
insgesamt 500,0g Wasser und
4,0g Ammoniumperoxydisulfat.
Unter starkem Rühren und Stickstoffspülung wurde das Reaktionsgemisch langsam im Wasserbad aufgewärmt. Das Ammoniumperoxydisulfat wurde, in wenig Wasser gelöst, zugetropft.
Die Monomeren-Mischung hatte die aus der nachstehenden, Tabelle 1 ersichtliche Zusammensetzung.

**Tabelle 1**

|  | I | II | III |
|---|---|---|---|
| Ethylacrylat | 64,5 % | 64,5 % | 64,5 % |
| Styrol | 15,3 % | 10,3 % | 20,3 % |
| Methacrylsäure | 15,3 % | 20,3 % | 10,3 % |
| HEMA (Hydroxyethylmeth-acrylat) | 3,4 % | 3,4 % | 3,4 % |
| Thioglykolsäure | 1,5 % | 1,5 % | 1,5 % |

### 2. Aminogruppenhaltiges Polymer (IV)

In einem Dreihalskolben, der mit Rührer, Rückflußküh-ler und $N_2$-Zuleitung sowie Tropftrichter ausgestattet war, wurde vorgelegt eine Mischung aus
160 g Methylacrylat
100 g Ethylacrylat
140 g Dimethylaminoneopentylmethacrylat
jeweils 9,5g von Natriumlauryl-(polyethoxy)-sulfat
(10 mol EO) sowie Nonylphenoxy-(polyethoxy)-dinatriumsulfosuccinat (10 mol EO) und weiterhin
insgesamt 500,0 g Wasser und
1,0 g Azo-bis-Cyanpentansäure.
Unter starkem Rühren und Stickstoffspülung wurde das Reaktionsgemisch im Wasserbad auf 90°C erwärmt und 2 Stunden bei dieser Temperatur belassen.
Die Schutzüberzüge wurden - wie folgt - hergestellt: In 90 g der nach I bis IV hergestellten Dispersionen wurden jeweils 9 g der organischen Nichtlöser 1 - 5 (Tabelle 2) und 1 g Sorbitanmonooleat eingerührt.

**Tabelle 2**

1 = Dioctylphthalat
2 = Ricinolsäure
3 = Isohexadecanol
4 = techn. Fettsäure ($C_{16/18}$)
5 = Isoparaffin, Sdp. 200 bis 230°C
Die so erhaltenen Beschichtungsmittel wurden auf Glasplatten der Abmessung 10 x 20 cm in einer Naßfilmdicke von 100μm aufgerakelt.
Zum Vergleich wurden die Dispersionen I, II, III und IV ohne Zusatz der organischen Nichtlöser aufgetragen.
Nachdem transparente Filme entstanden waren (5 - 15 Minuten), wurden die Glasplatten senkrecht zur Hälfte in demineralisiertes Wasser von 40°C eingetaucht. Während Filme aus Dispersionen ohne Nichtlöser nach 1 - 3 Minuten abgelöst und zum Teil redispergiert waren, hafteten die Filme mit Zusatz der Nichtlöser nach 60 Minuten noch ohne Blasenbildung.

In einem zweiten Test wurden die Beschichtungsmittel auf Basis der Grunddispersionen I bis III im Kreuzgang auf Stahlbleche der Abmessung 7 x 15 cm aufgespritzt und nach dem Trocknen an Luft eine Stunde bei 80°C im Trockenschrank gealtert. Zur Prüfung der Wiederablösbarkeit wurde in eine 25°C warme Reinigungsflotte eingetaucht und nach 1 bzw. 10 Minuten Verweilzeit unter fließendem Wasser von 50°C abgespült. Die Reinigungslösung bestand aus 96 Gew.-% Wasser, 3 Gew.-% Ammoniumchlorid, 1 % des Anlagerungsproduktes von 10 mol Ethylenoxid an ein mol Nonylphenol und war mit Ammoniak auf einen pH-Wert von 9 eingestellt. In der nachfolgenden Tabelle 3 sind die mit verschiedenen Beschichtungsmaterialien erhaltenen Ergebnisse nach 1- bis zw. 10-minütiger Tauchzeit in der letzten Kolonne wiedergegeben.

**Tabelle 3**

| Beispiel | Harz auf Basis Monomerzusammen-setzung | Weichmacher | Tauchzeit 1 min | 10 min |
|----------|----------------------------------------|-------------|-----------------|--------|
| 1 | I | 1 | O | + |
| 2 | I | 2 | + | + |
| 3 | I | 3 | - | + |
| 4 | I | 4 | O | O |
| 5 | I | 5 | - | + |
| 6 | I | 1 (1/4 der Menge) | O | + |
| 7 | II | 2 | O | + |
| 8 | III | 2 | O | + |

- = nicht gelöst
0 = teilgelöst
+ = abgelöst

In analoger Weise lassen sich Beschichtungen auf Basis der Grunddispersion IV mit sauren Lösungen, z.B. 5 Gew.-% Essigsäure in Wasser innerhalb von 10 Minuten ablösen.

**Vergleichsversuch**

Es wurde eine Dispersion auf Basis der folgenden Monomermischung hergestellt:
Ethylacrylat 64,5 %
Styrol 29,6 %
Methacrylsäure 1,0 %
H E M A 3,4 %
Thioglykolsäure 1,5 %.
Die Dispersion wurde zu Schutzüberzügen mit den Nichtlösern 1 - 5 verarbeitet. Die Überzüge zeigten gute Festigkeit gegen neutrales Wasser, waren aber auch durch alkalisches Wasser innerhalb 30 Minuten nicht ablösbar.

## Patentansprüche

1. Leicht entfernbare Schutzüberzüge liefernde wässrige Beschichtungsmittel auf Basis wässriger Dispersionen bzw. Emulsionen von zur Salzbildung befähigten synthetischen Copolymerisaten, dadurch gekennzeichnet, daß sie als wesentliche Bestandteile enthalten:

a) bei Temperaturen von 5°C und darüber filmbildende, zur Salzbildung befähigte Copolymerisate mit einem Gehalt an Säure- oder Aminogruppen, die als solche wasserunlöslich, in Salzform jedoch wasserlöslich sind und in wässriger Dispersion bzw. Emulsion vorliegen,

b) mit Wasser nicht mischbare, bei Raumtemperatur flüssige schwer flüchtige Nichtlöser für die Copolymerisate zu a) mit einem Festpunkt unterhalb von 10°C.

c) nichtionogene Emulgatoren mit einem HLB-Wert < 10 sowie

d) gegebenenfalls weitere übliche Hilfs- und/oder Zusatzstoffe,

wobei die Komponenten a) - c) in den folgenden Mengenverhältnissen vorliegen:

30 - 60 Gew.-% filmbildende Copolymerisate zu a)

5 - 50 Gew.-% Nichtlöser zu b) sowie

0,05 - 2,5 Gew.-% der nichtionogenen Emulgatoren zu c) und wobei sich diese Mengenangaben in allen Fällen auf das Gewicht der wäßrigen Dispersion des Copolymerisats zu a) ohne den Zusatz der Komponenten b - d) beziehen.

2. Beschichtungsmittel nach Anspruch 1, dadurch gekennzeichnet, daß die Polymerverbindung zu a) ein freie Carboxylgruppen aufweisendes Copolymerisat ist, daß im alkalischen Bereich wasserlöslich ist.

3. Beschichtungsmittel nach Ansprüchen 1 und 2, dadurch gekennzeichnet, daß die Polymerverbindung zu a) ein Copolymerisat aus ungesättigten Mono- und/oder Dicarbonsäuren mit vorzugsweise bis zu 5 C-Atomen und damit copolymerisierbaren Comonomeren ist, die bei einer Emulsionscopolymerisation in Wasser als geschlossener Phase eine diskrete, disperse Flüssigkeitsphase ausbilden, wobei gewünschtenfalls wasserlösliche Comonomere mitverwendet worden sein können.

4. Beschichtungsmittel nach Ansprüchen 1 bis 3, dadurch gekennzeichnet, das das Copolymerisat zu a) als Carbonsäurekomponente Acrylsäure, Methacrylsäure, Itaconsäure, Citraconsäure, Crotonsäure, Fumarsäure, Maleinsäure und/oder Anhydride oder Halbester der genannten Dicarbonsäuren enthält.

5. Beschichtungsmittel nach Ansprüchen 1 bis 4, dadurch gekennzeichnet, daß die Menge der Carbonsäurefunktionen - berechnet als Acrylsäure - im Copolymerisat zu a) im Bereich von etwa 5 - 35 Gew.-%, vorzugsweise im Bereich von etwa 10 - 25 Gew.-% liegt.

6. Beschichtungsmittel nach Ansprüchen 1 bis 5, dadurch gekennzeichnet, daß als Comonomere im Copolymerisat zu a) Ester ungesättigter copolymerisierbarer Carbonsäuren und/oder Alkohole, gegebenenfalls N-substituierte Anide ungesättigter Carbonsäuren, Vinylaromaten, ungesättigte Nitrile bzw. Halogenide und/oder Olefine ohne weitere Funktionalität vorliegen, wobei Comonomere aus der Gruppe Alkyl-(meth)-acrylate, Hydroxyalkyl(meth)-acrylate, Styrol und/oder Acrylnitril bevorzugt sein können.

7. Beschichtungsmittel nach Anspruch 1, dadurch gekennzeichnet, daß das Copolymerisat zu a) ein bis zu 60 Gew.-% Aminogruppen enthaltende Monomereinheiten aufweisendes Copolymerisat ist.

8. Beschichtungsmittel nach Ansprüchen 1 und 7, dadurch gekennzeichnet, daß im Copolymerisat zu a) als aminogruppenhaltige Monomere Ester und/oder Amide aus ungesättigten Carbonsäuren mit vorzugsweise bis zu 5 C-Atomen und Alkoholen und/oder primären Aminen, die zusätzlich eine tertiäre Aminogruppe aufweisen, vorliegen.

9. Beschichtungsmittel nach Anspruch 1, 7 und 8, dadurch gekennzeichnet, daß im Copolymerisat zu a) als aminogruppenhaltige Monomere Dimethylaminoethylacrylat, Dimethylaminopropylacrylat, Dimethylaminoneopentylacrylat, die entsprechenden Methacrylate und/oder die entsprechenden Diethylaminoverbindungen vorliegen.

10. Beschichtungsmittel nach Ansprüchen 1 bis 9, dadurch gekennzeichnet, daß als Nichtlöserkomponente b) bei Raumtemperatur flüssige, schwer flüchtige Paraffinbzw. Isoparaffingemische mit vorzugsweise mehr als 10 C-Atomen, Carbonsäuren und/oder Alkohole mit mehr als 6 C-Atomen, Etheralkohole mit mehr als 10 C-Atomen und/oder entsprechende bei Raumtemperatur flüssige schwer flüchtige Ester vorliegen.

11. Beschichtungsmittel nach Ansprüchen 1 bis 10, dadurch gekennzeichnet, daß als Nichtlöserkomponente b) wenigstens eine der folgenden Verbindungen vorliegt: Ester von geradkettigen natürlichen oder verzweigten Fettsäuren mit $C_1$-$C_4$-Monoalkoholen, Ester von Dicarbonsäuren, insbesondere Ester der Phthalsäure mit $C_6$-$C_8$-Alkoholen.

12. Beschichtungsmittel nach Anspruch 10, dadurch gekennzeichnet, daß die Nichtlöserkomponente b) ein natürlich vorkommendes Triglycerid ist.

13. Beschichtungsmittel nach Ansprüchen 1 bis 12, dadurch gekennzeichnet, daß als nichtionogener Emulgator c) das Umsetzungsprodukt von Nonylphenol mit 2 - 7 Mol Ethylenoxid und/oder das Umsetzungspro dukt eines Fettalkohols mit mehr als 10 C-Atomen mit 2 - 8 Mol Ethylenoxid und/oder ein Sorbitanester vorliegt.

14. Beschichtungsmittel nach Ansprüchen 1 bis 13, dadurch gekennzeichnet, daß das filmbildende Copolymerisat zu a) in Mengen von etwa 30 bis 60 Gew.-%, der Nichtlöser gemäß b) in Mengen von etwa 5 - 50 Gew.-% und der nichtionogene Emulgator gemäß c) in einer Menge von 0,05 - 2,5 Gew.-% - in allen Fällen bezogen auf die wässrige Dispersion des Copolymerisats zu a) - vorliegen.

15. Beschichtungsmittel nach Ansprüchen 1 bis 14, dadurch gekennzeichnet, daß sie die folgenden wesentlichen Bestandteile enthalten:

Als Komponente a): Im alkalischen Milieu wasserlösliches Mischpolymerisat auf Basis von Acrylpolymerisaten mit 5 bis 35 Gew.-% Carbonsäurefunktionen (berechnet als Acrylsäure) sowie weiterer Comonomeren aus der Gruppe Alkyl-(meth)-acrylate, Hydroxyalkylacryláte, Styrol und Acrylnitril,

als Komponente b): hydrophobe flüssige Weichmacher mit einem Festpunkt unterhalb von 10° C, wobei das Gewichtsverhältnis von a: b zwischen etwa 20: 1 und 20: 10 liegt sowie

als Komponente c): nichtionogene Emulgatoren mit einem HLB-Wert zwischen 2 und 10 in einer Menge von 1 bis 5 Gew.-%, bezogen auf die Summe der Komponenten a) und b) sowie gegebenenfalls

als Komponente d): anionische Emulgatoren, Farbstoffe, Pigmente und/oder Stabilisatoren.

16. Beschichtungsmittel nach Anspruch 15, dadurch gekennzeichnet, daß die Komponente a) aus Monomeren, die in Richtung hoher Glastemperaturen wirken, und Monomeren, die in Richtung niederer Glastemperaturen wirken, im Gewichtsverhältnis zwischen 4: 1 und 1: 1 hergestellt ist und daß die Komponente b) ein bis 30°C flüssiger Weichmacher ist.

17. Verwendung der Beschichtungsmittel nach Ansprüchen 1 bis 16 zum temporären Oberflächenschutz insbesondere von metallischen und/oder lackierten Oberflächen wie Automobilkarosserien und sonstigen Geräten, die in freier Atmosphäre gelagert werden, gegen klimatische und/oder mechanische Einflüsse.


## Revendications

1- Agents d'enduction aqueux donnant des revêtements protecteurs faciles à enlever, à base de dispersions ou émulsions aqueuses de copolymérisats synthetiques, capables de former des sels, caractérisés en ce qu'ils contiennent, comme parties constituantes essentielles:

a) des copolymérisats formant des films à des températures de 5°C et plus, capables de former des sels, ayant une teneur en groupes acides ou amino, qui, en eux-mêmes, sont insolubles à l'eau, sous forme de sels qui cependant sont solubles à l'eau, et se presentent sous forme de dispersions ou émulsions aqueuses;

b) des non-solvants des copolymérisats de a) non miscibles à l'eau, liquides à la température ambiante, s'évaporant difficilement, ayant un point de solidification inferieur à 10°C;

c) des emulsionnants non-ionogènes avec une valeur HLB inférieure à 10, ainsi qu'

d) eventuellements d'autres produits auxiliaires et/ou additifis usuels, où les composants a) à c) se presentent dans les rapports en quantites suivants:

30 à 60% en poids de copolymerisats formateurs de films de

5 à 50% en poids de non-solvants de b), ainsi que

0,05 à 2,5% en poids d'émulsionnants non-ionogenes de c), et où ces indications de proportions se rapportent, dans tous les cas au poids de la dispersion aqueuse du copolymèrisat de a), sans addition des composants b) à d).

2- Agent d'enduction suivant la revendication 1, caractérisé en ce que le composé polymére de a) est un copolymérisat, comportant des groupes carboxyl libres, qui est soluble dans la zone alcaline.

3- Agent d'enduction suivant les revendications 1 et 2, caractérisé en ce que le composé polymère de a) est un copolymèrisat d'acides mono- et/ou dicarboxyliques insaturés avec de préférence jusqu'à 5 atomes de carbone et de plus des comonomères copolymèrisables, qui forment, dans une copolymèrisation en émulsion dans l'eau, une phase liquide dispersée, séparée sous forme de phase fermée, des comonomères solubles à l'eau pouvant être utilisés, si on le désire dans l'ensemble.

4- Agent d'enduction suivant les revendications 1 à 3, caractérisé en ce que le copolymèrisat de a) contient, comme composants d'acides carboxyliques, les acides acrylique, methacrylique, itaconique, citraconique, crotonique, fumarique, maleique et/ou les anhydrides ou semi-esters des acides dicarboxyliques mentionnes.

5- Agent d'enduction suivant les revendications 1 à 4, caractérisé en ce que la proportion des fonctions acides carboxyliques, calculées en acide acrylique, dans le copolymèrisat, est de l'ordre d'environ 5 à 35% en poids, de preference d'environ 10 à 25% en poids.

6- Agent d'enduction suivant les revendications 1 à 5, caractérisé en ce que, comme comonomères dans le copolymèrisat de a), se trouvent des esters d'acides carboxyliques insaturés copolymèrisables et/ou des alcools, éventuellement des amides d'acides carboxyliques substituées en N, des vinyls aromatiques, des nitriles ou halogénures insatures, et/ou des oléfines sans autre fonction, des comonomères du groupe alcoyl-(meth)-acrylate, hydroxyalcoyl-(meth)acrylate, styrène, et/ou acrylonitrile pouvant être recommandés.

7- Agent d'enduction suivant la revendication 1, caractérisé en ce que le copolymèrisat de a) est un copolymèrisat comportant jusqu'à 60% en poids d'unités monomères contenant des groupes amino.

8- Agent d'enduction suivant les revendications 1 et 7, caractérisé en ce que, dans le copolymèrisat de a), se trouvent, comme monomères contenant des groupes amino, des esters et/ou des amides d'acides carboxyliques insaturés, avec de préférence jusqu'à 5 atomes de carbone, et des alcools et/ou des amines primaires, qui présentent supplémentairement un groupe amino tertiaire.

9- Agent d'enduction suivant la revendication 1, 7, et 8, caractérisé en ce que, dans le copolymèrisat de a) se trouvent, comme monomères contenant des groupes amino, les diméthylaminonéopentylacrylate, les méthacrylates correspondants et/ou les composés diéthylamino correspondants.

10- Agent d'enduction suivant les revendications 1 à 9, caractérisé en ce que, comme composants non-solvants b), on utilise des mélanges de paraffine ou d'isoparaffine, liquides à la température ambiante

10

s'évaporant difficilement, avec de préférence plus de 10 atomes de carbone, des acides carboxyliques et/ou des alcools avec plus de 6 atomes de carbone, des éthersalcools avec plus de 10 atomes C et/ou des esters correspondants liquides à la température ambiante qui s'évaporent difficilement.

11- Agent d'enduction suivant les revendications 1 à 10, caractérisé en ce que, comme composants non-solvants b), on utilise au moins un des composés suivants: Esters d'acides gras naturels à chaîne droite, ou ramifiée avec des monoalcools en $C_1$ à $C_4$, des esters d'acides dicarboxyliques, en particulier des esters de l'acide phtalique avec des alcools en $C_6$ à $C_8$.

12- Agent d'enduction suivant la revendication 10, caractérisé en ce que le composant non-solvant b) est un triglycéride que l'on trouve dans la nature.

13- Agent d'enduction suivant les revendications 1 à 12, caractérisé en ce que, comme émulsionnants non-ionogènes c), on utilise le produit de la réaction du nonylphénol, avec 2 à 7 moles d'oxyde d'éthylène, et/ou le produit de la réaction d'un alcool gras à plus de 10 atomes de carbone avec 2 à 8 moles d'oxyde d'éthylène, et/ou un ester de sorbitan.

14- Agent d'enduction suivant les revendications 1 à 13, caractérisé en ce que le copolymèrisat formateur de film de a) est utilisé dans une proportion d'environ 30 à 60% en poids, le nonsolvant suivant b) en proportions d'environ 5 à 50% en poids, et l'émulsionnant non-ionogène suivant c), dans une proportion de 0,05 à 2, 5 % en poids, rapporte, dans tous les cas, à la dispersion aqueuse du copolymèrisat de a).

15- Agent d'enduction suivant les revendications 1 à 11, caractérisé en ce qu'il contient les parties constituantes essentielles suivantes: Comme composant a): un polymèrisat mixte soluble à 1,eau en milieu alcalin, à base de polymèrisats acryliques avec 5 à 35% en poids de fonctions carboxyliques (calculé en acide acrylique), ainsi que d'autres comonomères du groupe des alcoyl-(meth)-acrylates, hydroxyalcoylacrylates, styrène, et acrylnitrile, Comme composant b): des plastifiants liquides hydrophobes avec un point de solification inférieur à 10°C, le rapport en point entre a et b se situant entre 20: 1 et 20: 10, ainsi que,

Comme composant c): des émulsionnants non-ionogènes avec une valeur HLB entre 2 et 10, dans une proportion de 1 à 5% en poids, calculé sur la somme des composants a) et b); ainsi qu'éventuellement, comme composant d); des émulsionnants anioniques, des colorants, pigments et/ou des stabilisants.

16- Agent d'enduction suivant la revendication 15, caractérisé en ce que le composant a) est fabriqué à partir de monomères qui agissent dans le sens d'une élévation de la température de passage à l'état vitreux et de monomères qui agissent dans le sens de l'abaissement de la température de passage à l'état vitreux, dans un rapport pondéral entre 4: 1 et 1: 1, et que le composant b) est un plastifiant liquide jusqu'à 30°C.

17- Utilisation de l'agent d'enduction suivant les revendications 1 à 16, pour la protection temporaire de surfaces, en pariculier des surfaces métalliques et/ou vernis telles que celles des carrosseries automobiles, et objets analogues, que l'on stocke à l'air libre, contre les influences climatiques et/ou mécaniques.

## Claims

1. Aqueous coating compositions giving readily removable protective coatings and based on aqueous dispersions or emulsions of synthetic copolymers capable of salt formation, characterized in that they contain as their essential constituents:

a) copolymers containing acid or amino groups which are capable of salt formation and which are film-forming at temperatures of 5°C and higher, being insoluble in water as such, but soluble in water in salt form and being present in aqueous dispersion or emulsion,

b) water-immiscible, substantially involatile non-solvents for the copolymers a) which are liquid at room temperature and which have a solidus point below 10°C,

c) nonionic emulsifiers having an HLB-value <10 and

d) optionally other standard auxiliaries and/or additives, components a) to c) being present in the following quantitative ratios:

from 30 to 60 % by weight of film-forming copolymers a)

from 5 to 50 % by weight of non-solvents b)

from 0.05 to 2.5 % by weight of nonionic emulsifiers c),

these quantities being based in every case on the weight of the aqueous dispersion of the copolymer a) without the addition of components b) to d).

2. Coating compositions as claimed in Claim 1, characterized in that the polymer compound a) is a copolymer containing free carboxyl groups which is soluble in water in the alkaline range.

3. Coating compositions as claimed in Claims 1 and 2, characterized in that the polymer compound a) is a copolymer of unsaturated mono- and/or dicarboxylic acids preferably containing up to 5 C-atoms and comonomers copolymerizable therewith which, in the case of emulsion copolymerization in water as continuous phase, form a discrete disperse liquid phase, water-soluble comonomers having been used if desired.

4. Coating compositions as claimed in Claims 1 to 3, characterized in that the copolymer a) contains acrylic acid, methacrylic acid, itaconic acid, citraconic acid, crotonic acid, fumaric acid, maleic acid and/or anhydrides or semiesters thereof as the carboxylic acid component.

5. Coating compositions as claimed in Claims 1 to 4, characterized in that the quantity of carboxylic acid functions - expressed as acrylic acid - in the copolymer a) is in the range from about 5 to 35% by weight and preferably in the range from about 10 to 25% by weight.

6. Coating compositions as claimed in Claims 1 to 5, characterized in that esters of unsaturated copolymerizable carboxylic acids and/or alcohols, optionally Nsubstituted amides of unsaturated carboxylic acids, aromatic vinyl compounds, unsaturated nitriles or halides and/or olefins without further functionality are present as comonomers in the copolymer a), comonomers from the group comprising alkyl (meth)acrylates, hydroxyalkyl (meth)acrylates, styrene and/or acrylonitrile being preferred.

7. Coating compositions as claimed in Claim 1, characterized in that the copolymer a) is a copolymer containing up to 60% by weight of amino groups.

8. Coating compositions as claimed in Claims 1 and 7, characterized in that esters and/or amides of unsaturated carboxylic acids preferably containing up to 5 C-atoms and alcohols and/or primary amines · additionally containing a tertiary amino group are present as amino-group-containing monomers in the copolymer a).

9. Coating compositions as claimed in Claims 1, 7 and 8, characterized in that dimethylaminoethyl acrylate, dimethylaminopropyl acrylate, dimethylaminoneopentyl acrylate, the corresponding methacrylates and/or the corresponding diethylamino compounds are present as amino-group-containing monomers in the copolymer a).

10. Coating compositions as claimed in Claims 1 to 9, characterized in that substantially involatile paraffin or isoparaffin mixtures preferably containing more than 10 C-atoms, carboxylic acids and/or alcohols containing more than 6 C-atoms, ether alcohols containing more than 10 C-atoms, all liquid at room temperature, and/or corresponding substantially involatile esters liquid at room temperature are present as the non-solvent component b).

11. Coating compositions as claimed in Claims 1 to 10, characterized in that at least one of the following compounds is present as the non-solvent component b): esters of straightchain, natural or branched fatty acids with $C_1$-$C_4$ monoalcohols, esters of dicarboxylic acids, particularly esters of phthalic acid with $C_6$-$C_8$ alcohols, is present as the non-solvent component b).

12. Coating compositions as claimed in Claim 10, characterized in that the non-solvent component b) is a naturally occurring triglyceride.

13. Coating compositions as claimed in Claims 1 to 12, characterized in that the reaction product of nonyl phenol with 2 to 7 moles of ethylene oxide and/or the reaction product of a fatty alcohol containing more than 10 C-atoms with 2 to 8 moles of ethylene oxide and/or a sorbitan ester is present as the nonionic emulsifier c).

14. Coating compositions as claimed in Claims 1 to 13, characterized in that the film-forming copolymer a) is present in quantities of from about 30 to 60% by weight, the non-solvent b) in quantities of from about 5 to 50 % by weight and the nonionic emulsifier c) in a quantity of from 0.05 to 2.5% by weight, based in every case on the aqueous dispersion of the copolymer a).

15. Coating compositions as claimed in Claims 1 to 14, characterized in that they contain the following essential constituents:

as component a): a copolymer, soluble in water in alkaline medium, based on acrylic polymers containing from 5 to 35% by weight of carboxylic acid functions (expressed as acrylic acid) and other comonomers from the group comprising alkyl (meth)acrylates, hydroxyalkyl acrylates, styrene and acrylonitrile,

as component b): hydrophobic liquid plasticizers having a solidus point below 10°C, the ratio by weight of a) to b) being from about 20:1 to 20:10 and

as component c): nonionic emulsifiers having an HLB-value of from 2 to 10 in a quantity of from 1 to 5% by weight, based on the sum of components a) and b) and optionally

as component d): anionic emulsifiers, dyes, pigments and/or stabilizers.

16. Coating compositions as claimed in Claim 15, characterized in that component a) is prepared from monomers active in the direction of high glass temperatures and monomers active in the direction of low glass temperatures in a ratio by weight of from-4:1 to 1:1 and in that component b) is a plasticizer liquid up to 30°C.

17. The use of the coating compositions claimed in Claims 1 to 16 for the temporary surface protection of, in particular, metallic and/or lacquered surfaces, such as automobile bodies and other objects stored in the open air against climatic and/or mechanical influences.